# EUROPEAN PATENT SPECIFICATION

(11) **EP 1 230 777 B1**
(45) Date of publication and mention of the grant of the patent: **22.10.2008**
(21) Application number: 00977017.3
(22) Date of filing: 07.11.2000
(51) Int. Cl.: H04L 29/06

(54) **METHOD AND APPARATUS FOR PROVIDING REDUNDANT AND RESILIENT CRYPTOGRAPHIC SERVICES**
VERFAHREN UND VORRICHTUNG ZUM BEREITSTELLEN VON REDUNDANTEN UND FLEXIBELEN DIENSTEN
PROCEDE ET DISPOSITIF SERVANT A FOURNIR DES SERVICES CRYPTOGRAPHIQUES REDONDANTS ET FLEXIBLES

(30) Priority: 10.11.1999 US 164673 P; 08.03.2000 US 521371
(43) Date of publication of application: 14.08.2002
(73) Proprietor: UNISYS CORPORATION, Blue Bell, PA 19424-0001 (US)
(72) Inventor: CLAYTON, Kevin, F., Coto de Caza, CA 92679 (US); DEAN, David, A., Coatesville, PA 19320 (US); KAIN, Michael, T., Chester Springs, PA 19425-8762 (US); SALAMON, Gary, West Chester, PA 19380 (US); MILLIGAN, Andrew David, Wavendon Gate, Milton Keynes MK7 7JF (GB)
(74) Representative: Modiano, Micaela Nadia
(86) International application number: PCT/US2000/030592
(87) International publication number: WO 2001/035194

(56) References cited:
- US-A- 5 812 768
- US-A- 5 966 448

## Description

### Field of the Invention

The present invention relates generally to providing cryptography services on a computer system, and more particularly, to providing distributed cryptographic services on a computer system having resiliency to overcome operating environment failures.

### Background of the Invention

Advances in computing technologies have allowed for the development of new computing architectures that rival the performance of existing large scale computer systems and implementations (i.e. mainframe and distributive processing computing systems). The performance characteristics of new computing architectures have lent credence to a developing notion that with increasing acceptance of new computing technologies, large scale computing would realize a significant decrease in use. Contrarily, however, as information technologies have advanced, such as with the proliferation of the Internet and the World Wide Web, the developing notion has become inaccurate. Today, large scale computing is experiencing a significant resurgence. New transactional and information technologies, along with their associated software applications, require computing resources capable of performing a myriad of simultaneous transactions. Such computing needs are best suited for existing and newly developed large scale computing systems.

Along these lines, the commercial sector has capitalized on information technology breakthroughs by developing cyber-marketplaces, realms in which private and commercial consumers are afforded the ability to buy and sell goods and services using a personal computer. Corporate entities, consistent with this effort, are developing complex, robust, and efficient computer applications to reach out to their increasing customer base. As a result, the business world is placing demands on computer manufacturers to deliver efficient, reliable, and responsive computing to support new market needs. Computer manufacturers are responding by delivering better and improved large computing architecture computer systems, that have the ability to run complex applications over multiple operating environments and different operating platforms.

With new corporate uses of computing technology comes potential hazards and concerns, such as security breaches. Hence, security is tantamount to success. Some of the information required by today's business applications can be sensitive or private in nature. By way of example, consumers participating in electronic commerce may be required to exchange private information such as credit card numbers, addresses, telephone numbers and the like. Consumers, however, would not be willing to divulge this private information without some assurance that the information proffered is to travel securely. Once again, the commercial sector has turned to computer manufacturers to develop and deliver these assurances.

Computer developers, in addressing computing security, are utilizing cryptography (i.e. process of encrypting and decrypting information passing between participating parties using a "key" known by these parties) to secure information that is exchanged. Several cryptography security standards have been developed to facilitate the exchange of information across different computing environments and operating platforms. Currently, the large computing industry appears to favor one-processor implementations of cryptographic services, which dedicates precious processing resources to one given task. In an attempt to minimize the toll on mainframe processors, some in the industry have offloaded certain cryptography services onto add-in card(s) plugged into peripheral buses, such as PCI. However, this solution can be cumbersome and may not provide fail-over resiliency in the case of a peripheral card failure. Furthermore, cryptographic services inherently demand a high and continuous level of system wide security, requiring the secured exchange of data used in cryptographic service processing.

Today, there are also large computer systems that utilize multiple operating environments. Such systems could provide efficient cryptography services by offloading processing to available operating environments. This implementation may increase overall large computing processing efficiency and allow implementation of resiliency to accommodate fail-over processing failures. Accordingly, it is desired to provide a method and apparatus for providing distributed and resilient cryptographic services in computer systems utilizing multiple operating environments.

U.S. Patent No.5,812,768 A (Pagéet et. al) discloses a brokered adaptor service that includes a service broker 14 and a broker adaptor. The service is capable of managing service requests between clients and servers that may reside on systems having different platforms and/or operating systems, and which may be connected to networks having different architecture/protocols. The broker service of U.S. Patent No. 5,812,768 A operates much like standard client/server architecture; that is, a request for a service is generated by a client-participant to a particular server-participant. It does not teach or suggest resiliency in cryptographic services in case the requested server-participant fails.

U.S. Patent No. 5,966,448 (Namba et. al) discloses a cryptographic system, which allows cryptographic communications between terminal using different cipher types. It also does not teach or suggest a system and method for providing distributed cryptographic services for a computer system having a plurality of independent operating environments, such cryptographic services system and method providing resiliency to overcome operating environment failures.

WO 9849804 (Frankel et. al.) discloses a resilient cryptographic system and method. It does not teach determining means whether the additional operating environments are performing a requested cryptographic service.

### Summary of the Invention

The present invention provides a system and methods allowing for distributed and resilient cryptography services for a computing system. In accordance with the invention, a computer system having a plurality of independent operating environments maintains a cryptographic services interface in one of the operating environments. At least one of the other alternate operating environments maintains cryptographic services that are accessed through the interface. The cryptographic services interface also has the ability to determine which alternate operating environments are available, as well as the type and nature of any cryptographic services that might be running on such operating environments.

During operation, the cryptographic services interface initiates communication dialogs with the alternate available operating environments. Additionally, the cryptographic services interface cooperates with applications to create cryptography services processing sessions for cryptographic services processing with cryptographic services running on the alternate available operating environments. The cryptography services processing sessions operate over the established communication dialogs. The communication dialogs operate over a secure communications interface.

The cryptographic services interface receives requests for cryptographic services from local applications and processes such requests to establish cryptographic services processing sessions. The requests received comprise a function call to initiate cryptographic services, information or data requiring cryptography, and information about the requestor. A unique cryptographic services processing session is then created between the requesting application and a specified cryptography service found in the alternate operating environments. The cryptographic services interface facilitates the request through the established cryptographic services processing session communicating with the required cryptographic services. In turn, the cryptographic services perform cryptographic functions on such requests and return completed requests to the cryptographic services interface, that returns them to the local applications.

During processing, the cryptographic services interface monitors and stores processing states for cryptographic services that have state information. If the distributed cryptographic services (i.e. those that are distributed into alternate operating environments) fail or malfunction during the processing of the application request, the cryptographic services interface transfers information about the failed cryptographic service processing to the requesting application. At that point, the application may resubmit an additional request to initiate a unique cryptographic services processing session. This new cryptographic services processing session may be created between the requesting application and an alternate cryptographic service, one capable of performing the desired cryptographic function.

Once processed, the cryptographic services communicate the completed requests to the cryptographic services interface. In turn, the cryptographic services interface passes the processed requests to the requesting application. The object is achieved by the apparatus defined in claim 1 and by the method defined in claim 13.

### Brief Description of the Drawings

The cryptography system providing redundant and resilient cryptography in accordance with the present invention is further described with reference to the accompanying drawings in which:
Figure 1 is a system schematic of the hardware that implements the present invention;
Figure 2 is a block diagram showing the cooperation of the various operating environments in accordance with the present invention;
Figure 2A is a block diagram showing a session as contemplated by Figure 2 in accordance with the present invention;
Figure 3 is a flowchart diagram of the processing performed by the cryptographic system to initialize communication dialogs in accordance with the present invention;
Figure 4 is a flowchart diagram of the processing performed by the cryptographic system to initialize components of the cryptographic system to receive and process requests for cryptography;
Figure 5 is a flowchart diagram of the processing performed by the cryptographic services interface when processing the requests for cryptography; and
Figure 6 is a flowchart diagram of processing undertaken by the cryptographic system when performing cryptographic functions that satisfy requests for cryptography.

### Detailed Description of Preferred Embodiments

### Cryptography Overview:

Data communication channels are often insecure, subjecting messages transmitted over the channels to passive and active threats. With a passive threat, an intruder intercepts messages to view the data. An effective tool for protecting messages against the active and passive threats inherent in data communications is cryptography.

Cryptography is the science of mapping readable text, called plain-text or clear-text, into an encoded and unrecognizable format, called cipher-text, and vice versa. The mapping process generally involves a series of mathematical computations on the data. The computations affect the appearance of the data, without changing its meaning.

To protect a message, an originator transforms a plain-text message into cipher-text. This process is called encryption. The cipher-text is then transmitted over the data communications channel(s). In the event that the message is intercepted, the intruder only has access to the unintelligible cipher-text. Additionally, to ensure the recipient that the true sender originated the message, and not some impostor, the sender can "digitally sign" the message with its own unique digital signature. Upon receipt, the message recipient transforms the cipher-text into its original plain-text format. This process is called decryption or decipherment. Other cryptographic primitives aside from encryption and decryption include digital signing and verification.

The mathematical operations used to map between plain-text and cipher-text are identified by cryptographic algorithms. Cryptographic algorithms require the text to be mapped, and, at a minimum, requires some value which controls the mapping process. This value is called a key. Given the same text and the same algorithm, different keys produce different mappings. Cryptographic algorithms need not be kept secret. The success of cryptography is attributed to the difficulty of inverting an algorithm. That is, a user with the correct key can easily decrypt a message, whereas a user without a key would need to attempt random keys from a set having a myriad of possible values.

During processing, cryptographic services may employ various cryptographic algorithms. These algorithms have distinct advantages over their counterparts and may be used to satisfy different needs. For example, public key algorithms use a different key for encryption and decryption, and the decryption key cannot (practically) be derived from the encryption key. Public key methods are important because they can be used to transmit encryption keys or other data securely even when the parties have no opportunity to agree on a secret key in private. However, all known methods that utilize public key algorithms are slow, and they are usually only used to encrypt session keys (randomly generated "normal" keys), that are then used to encrypt the bulk of data using symmetric cipher (as described above). Other cryptography algorithms include secret key algorithms and cryptography hash functions.

Regardless of the algorithm employed, the goals of cryptography are to provide various services, including authentication, integrity, non-repudiation, and secrecy. Authentication allows the recipient of a message to validate its origin. It prevents an imposter from masquerading as the sender of the message. Integrity assures the recipient that the message was not modified en route. The integrity service allows the recipient to detect message modification, but not to prevent it. Non-repudiation may provide a recipient with assurance of the identity of the sender, or in the alternative, provides the sender assurance of message delivery. Secrecy, which also may be known as confidentiality, prevents the disclosure of the message to unauthorized users.

### Distributed Cryptography:

In the context of computer systems and computer networks, cryptography may be implemented as a part of a computer operating environment. The computer operating environment provides functionality dedicated to performing the complex and processing-laden cryptography computations. Furthermore, an application interface may be used to allow applications access to cryptographic functions in a standardized way. Such implementation allows multiple applications to incorporate security measures through cryptography.

By way of example, an application running in a given computer system, in accordance with the invention, may require cryptographic services as part of its functionality. The application would submit a request to the cryptographic services interface. The cryptographic services interface is first initialized such that it can communicate with the alternate operating environments running on this computer system. This communication may be realized through the creation of communication dialogs (e.g. using the TCP/IP protocol) over a secure communication interface. As part of the initialization, the application interface recognizes available alternate operating environments that have cryptographic services and the nature of the cryptographic services. The cryptographic services provide a library of routines that perform various functions including, encryption, decryption, and digital signatures. After initialization and upon receiving a request for a specific cryptographic service, the cryptographic services interface initiates cryptographic services processing sessions between the requestors and the desired cryptographic services found in the alternate operating environments. The sessions are used to distribute requests for specific cryptographic functions, for example such as a request for encryption or decryption, to those cryptographic services capable of performing the desired function.

When receiving a cryptographic services request, the cryptographic services inter- face processes the request and attempts to create a session between the requestor and the desired cryptographic service using the established communication dialogs. As the session is independent of the communication dialog, the cryptographic services interface can process a number of requests simultaneously over the established communication dialogs operating between the cryptographic services interface and cryptographic services foundin available alternate operating environments. The request is processed by the cryptographic services and then passed back to the application through the cryptographic services interface for use.

Additionally, the cryptographic services interface monitors and stores processing states about specific cryptographic services that have state information. The monitoring is performed to provide resiliency for applications requesting such cryptographic services. That is, the cryptographic services interface is monitoring for faulty or incomplete processing. In the event of incomplete or faulty processing, the cryptographic services interface communicates information about the failed cryptographic service to the requesting application. The application may then resubmit the failed cryptographic processing request with this state information to the cryptographic services interface to establish a different unique cryptographic session. This session may be established with a cryptographic service performing the same cryptographic function, but running on yet another alternate operating environment. The new session, like its predecessor, operates over the communication dialogs established between the cryptographic services interface and the alternate operating environment. By doing so, the cryptographic services interface provides fail-over protection.

However, there are potential hazards for using cryptographic functions in the computerized network setting. Since the functions are carried out electronically, the user might assume the cryptographic routines are operating as expected, yet not be aware of sophisticated electronic attacks. Careless applications might use cryptographic encryption or signature keys in ways to jeopardize the keys' secrecy. Moreover, malicious applications might even deliberately compromise the user's secrecy, or worse, perform unauthorized cryptographic operations. For instance, a malicious application, might attempt to decrypt the user's secret files and transmit them to some adverse party. Another situation might involve an application attempting to digitally sign information on behalf of a user without the user's knowledge or consent. A computer implemented cryptographic system must therefore provide the needed security to prevent attack from poorly devised or malicious applications.

There are several countermeasures that may be implemented to overcome security problems inherent in computer networks. For example, the computer network may be designed such that the network connections are physically proximate to each other. By doing so, the computer network may be more easily monitored for unwarranted or unsolicited activities.

In the case described above, the present invention may be utilized to realize cryptography. The present invention contemplates a method and apparatus for providing cryptography services to applications wherein the processing for the cryptography is distributed among independent operating environments that cooperate through an electronic connection. However, as described above, in order for cryptography to be successful, the processing for cryptography should be secure. Accordingly, the present invention requires a secure electronic connection between the cooperating independent operating environments for proper operation. The secure connection is needed so that cryptographic processing is not compromised.

Security may be accomplished by providing a monitored physical connection between the various network hardware running the computer operating environments. This type of security may be ensured by keeping the network hardware in close proximity to each other. Alternatively, in the case where all of the computer operating environments reside and run in a single computer hardware configuration, the connection may be secured through software to secure communications between the computer operating environments.

A preferred secure communication scheme is one that facilitates secure communication among heterogeneous computer systems having varying hardware configurations and running varying operating environments. Example implementations of such secure communication schemes are Virtual Transport Layers using a Messaging SubSystem (VTL/MSS) and Virtual LANs (VLANs). Generally, MSS is a system interconnect independent messaging transport which presents to its users many different delivery and notification mechanisms for the transfer of both control and data information between different heterogeneous environments, while VTL uses the MSS connection to provide a consistent, interconnect independent interface. Comparatively, a VLAN enables a first network protocol provider, executing on a first computer system, and second network protocol provider , executing on a second computer system which is directly interconnected to the first computer system, to communicate at high speed, with low latency, such that both systems may use their native mechanisms to communicate with each other without change in those mechanisms, rather than over conventional communication paths. As such, these communication schemes allow heterogeneous computer systems to communicate without sacrificing security. Virtual transport layers (VTLs) and Virtual LANs (VLANs) are proposed in pending U.S. Patent Applications Serial No. 09/126,920 and Serial No. 09/088,552, respectively. These applications are assigned to the present assignee and the contents thereof are hereby incorporated by reference in their entirety.

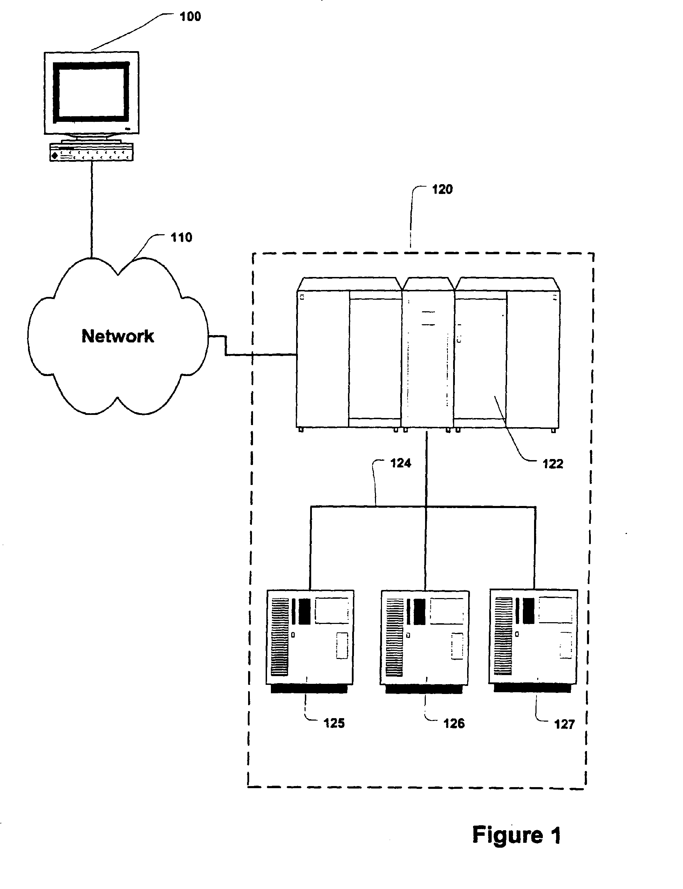

As will be described below with respect to Figures 1-6, the present invention is directed to a system and methods providing distributed and resilient cryptographic services for a computer system. In accordance with a preferred embodiment thereof, the present invention comprises a system and method to distribute cryptographic service processing among a plurality of computing operating environments capable of performing cryptographic processing and to monitor these computer operating environments such that if a computing environment fails during cryptographic service processing, the request (if desired) can be redistributed to an alternative computer operating environment having the required cryptographic service.

In one embodiment, described more fully hereinafter, the methods and apparatus of the present invention may be implemented as part of a computer system having a plurality of computer operating environments. Although the depicted embodiment provides distributed and resilient cryptography for a computer system having operating environments residing in disparate computing hardware, those skilled in the art will appreciate that the inventive concepts described herein extend to various types of computer system configurations having a plurality of computing operating environments running on various hardware configurations.

### System Overview:

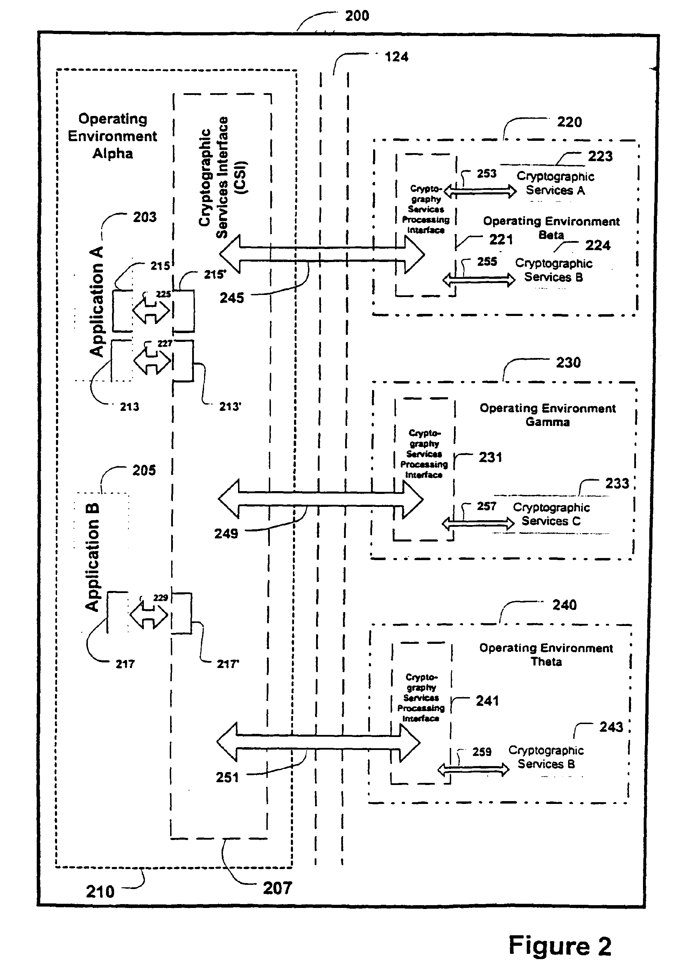

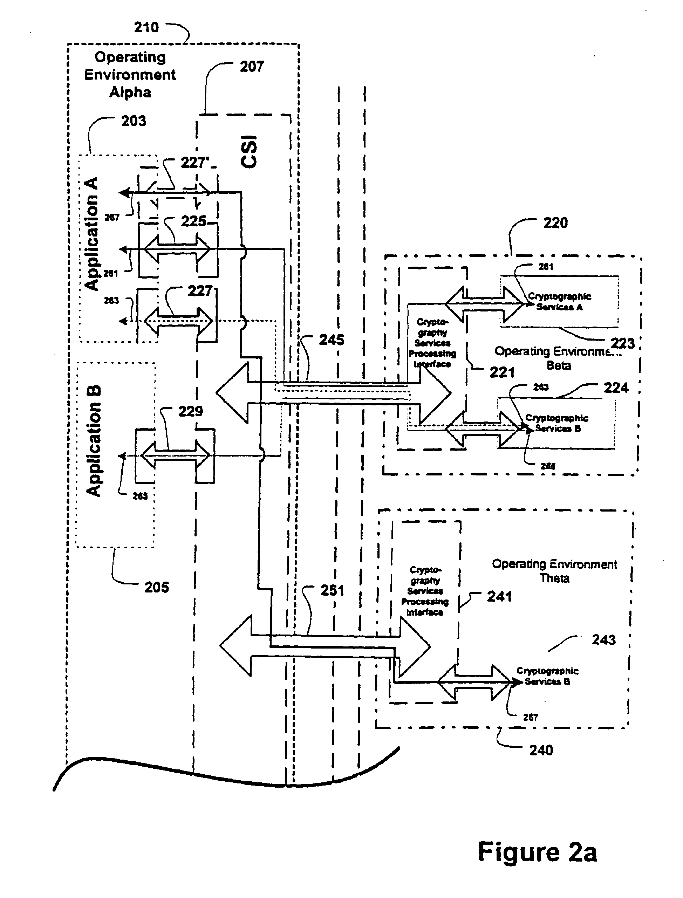

Figure 1 shows a stand-alone computer 100 communicating with computer system 120 over computing network 110. As shown, computing system 120 includes a plurality of computing devices 122, 125, 126, and 127. Computing device 122 (which may take the form of a large scale computer such as a mainframe) communicates with alternate computing devices 125, 126, and 127 (that may take the form of computer servers) through secure communication interface 124. During operation, an operator (not shown) may request and transmit information through computer 100 to and from computing system 120 over computing network 110. This information may be part of an application (such as an e-commerce application) (not shown) or application protocol operating between computer 100 and computing system 120. Additionally, this information may be sensitive and require cryptographic services. When cryptography services are required from computing system 120, computing system 120 processes the request and performs cryptographic services on a cryptographic service system (as shown in Figures 2 and 2a) in accordance with the request. In an illustrative embodiment, computing system 120 is a UNISYS MCP running on a CLEARPATH HMP/NX mainframe computer system, and computing devices 125, 126, and 127 are WINDOWS NT servers, running on INTEL processors.

Figures and 2 and 2a show a cryptographic system 200 of the present invention. As indicated in Figure 2, cryptographic system 200 is typically based on some form of computer or computer system. The type of computer or computer system is not important and could be a personal computer, a mainframe system, or some intermediate machine.

Cryptographic system 200 has a plurality of computing operating environments 210, 220, 230, and 240. Further, Figure 2 shows operating environment Alpha 210 maintaining computing application A 203 and computing application B 205. Applications 203 and 205 are linked to cryptographic services interface 207 of operating environment 210. Cryptographic services interface 207, in turn, is electronically coupled to a plurality of operating environments 220, 230, and 240 through communication interface 124 (of Figure1). Similarly, operating environments 220, 230, and 240 maintain cryptography services processing interfaces 221, 231, and 241, respectively. These cryptography services processing interfaces 221, 231, and 241 cooperate with cryptographic services interface 207 to communicate information between the applications 203 and 205 of operating environment 210, and cryptographic services 223, 224, 233, 243 of operating environments 220, 230, and 240, respectively. This communication of information is facilitated through the use of communication dialogs 245, 249, and 251 and procedure calls 253, 255, 257, and 259. In turn, each of the cryptographic services 223, 224, 233, and 243 performs one or more of the various functions required for cryptography.

During initialization of operating environment 210, cryptographic services processing interface 207 determines which alternate operating environments are available and proceeds to initiate communication dialogs (e.g. TCP/IP dialogs) over secure communication interface 124, with cryptography services interfaces 221, 231, and 241 of alternate operating environments 220, 230, and 240. In using communication dialogs 245, 249 and 251, cryptographic service interface 207 is capable of determining any changes to the operation of already detected and cooperating alternate operating environments or to detect the presence of newly instituted operating environments.

As part of communication dialog initialization, cryptographic service interface 207 determines which cryptographic services are available, as well as the type of cryptographic functions these services may perform. For example as shown in Figure 2, operating environment beta 220 maintains cryptographic service A 223 and cryptographic service B 224. Cryptographic service A 223 may perform a given set of cryptographic functions that are different from the cryptographic functions performed by cryptographic service B 224. Further, as Figure 2 shows, the cryptographic services have particular configuration requirements. That is, multiple occurrences of a given type of cryptographic service (i.e. cryptographic service A, B, or C) may reside among the many alternate operating environments 220, 230, and 240, but only a single occurrence of a cryptographic service type (i.e. cryptographic service A, B, or C) can reside within a given alternate operating environment. Once established, communication dialogs 245, 249, and 251 may be used by computing applications 203 and 205 when requesting cryptographic services.

In operation, an operator through an application or application protocol may request services from computing application 203 or computing application 205 residing in operating environment 210. As part of this request, computing application 203 may be required to communicate information using some form of cryptography. In an effort to satisfy the request, computing application 203 may submit a request for cryptographic services requiring specific cryptography functions (e.g. such as encryption) for some given information to cryptographic services interface 207. As shown in Figure 2a, upon receiving a request for cryptography, cryptographic services interface 207 establishes one of the independent sessions 261, 263, and 265 between the requesting application 203 or 205 and the targeted cryptographic services 223, 224, 233, and 243 (depending on what the requesting application needs). In turn, cryptographic services 223, 224, 233, and 243 perform various cryptography functions (e.g. encryption, decryption, or digital signatures) in the effort to satisfy the request. Additionally, during cryptographic services processing (i.e. when performing cryptographic functions), cryptographic services interface 207 may monitor and store information about such processing.

As shown in Figure 2, application A 203 and application B 205 may communicate with cryptographic services interface 207 through procedure calls 225, 227 and 229. Such procedure calls facilitate the creation of independent cryptographic processing sessions. In the creation of such sessions, cryptography state information about the cryptographic service request and subsequent cryptographic services 223, 224, 233, and 243 processing may be stored by both applications 203 and 205 and cryptographic services interface 207. Indicated in Figure 2, cryptography processing variable states α 213, 215, and 217 are maintained by applications 203 and 205 and cryptography states-stores β 213', 215', and 217' are maintained by cryptographic services interface 207. The cryptography processing variable states α 213, 215, and 217 and cryptography states-stores β 213', 215' and 217' are communicated to and from the cryptographic services interface 207 during cryptographic services request processing. The state information will generally be stored for cryptographic services requests and cryptographic services processing that require state information for proper operation (e.g. cipher chain block (CBC) encryption).

Each session 261, 263, 265 or 267, as shown in Figure 2a, is initiated such that the session is in communication with only one specific cryptographic service. Hence, if a request is made by application A 203 for encryption, cryptographic services interface 207 will initiate a session over an established communication dialog (e.g. 245) between application A 203 and the cryptographic service capable of performing the requested encryption (e.g. cryptographic services B 224). In the event that application B 205 requests the same cryptographic service (e.g. cryptographic services B 224) for which a session has been established with application A, cryptographic services interface 207 creates an independent session, regardless of the already established cryptographic services session, between application B 205 and the desired same cryptographic service (i.e. cryptographic services B 224).

Communications offered by cryptographic services interface 207 that are directed towards cryptography are received by cryptography processing interfaces 221, 231, and 241 of operating environments 220, 230, and 240, respectively. Cryptography processing interfaces 221, 231, and 241 communicate with cryptography services 223, 224, 233, and 243 to pass the various requests for cryptography. In turn, cryptographic services 223, 224, 233, and 243, each having the ability to independently perform various cryptographic functions, performs requested cryptography functions on the passed information. Cryptography services 223, 224, 233, and 243 pass back cryptography processed information to cryptography services processing interfaces 221, 231, and 241. The cryptographic processed information in turn is passed back to cryptographic services interface 207. Cryptographic services interface 207 passes the cryptographic processed information to application 203 for use. Application 203 or 205 is now capable of providing the requested information to the originator of the request.

Cryptographic services interface 207 also maintains monitoring and storage features such that it monitors and stores information about the processing performed by certain cryptographic services 223, 224, 233, and 243 for submitted requests. Monitoring and storage features are generally performed by cryptographic services interface 207 for cryptographic services that require cryptography state information to perform cryptographic processing (e.g. CBC encryption or decryption). When this specific kind of cryptography service fails or malfunctions, the cryptographic service will pass information about the state of the failed processing back to cryptographic service interface 207 through communication dialogs 245, 249, or 251. The cryptography state information is stored in cryptography states-stores β 213', 215', or 217' of cryptographic services interface 207 and forwarded to cryptography processing variable states 213, 215, or 217. The original requestor is notified of the failed cryptographic processing and is passed the failed processing state information generated by this specific kind of cryptographic services 223, 224, 233, and 244. Using this information about failed cryptographic services processing, the original requestor may choose to re-submit the failed cryptographic services request to cryptographic services interface 207 for processing. The request along with the failed state processing information is processed by cryptographic services interface 207 to find an appropriate alternate cryptographic service 223, 224, 233 or 243 (i.e. a cryptographic service that performs the same cryptographic functions and that use state information when performing cryptographic functions) running on an alternate operating environment to satisfy the request. If an appropriate alternate cryptographic service is found, the failed request is used to create a new independent cryptographic services processing session between the requesting application 203 or 205 and the newly discovered appropriate alternate available cryptographic service.

The new independent session uses the stored failed processing cryptography state information to realize cryptographic services processing. Specifically, the cryptographic services associated with the alternate session uses the failed processing state information from the previous cryptographic services processing attempt to perform cryptographic services on the re-submitted request. In the event that there are no available appropriate alternate cryptographic services, cryptographic service processing is suspended by the application for the re-submitted request until an appropriate alternate session is established.

For example, as shown by Figures 2 and 2a if a request is being processed by cryptographic services B 224 in session 263 fails during processing, cryptographic services interface 207 would receive information about the failed processing from cryptographic services 221 and notify the original requestor (e.g. application 203) about the failed processing, including communicating the failed processing state information. If the original requestor re-submits the request (i.e. a request for cryptographic services that perform cryptographic functions like cryptographic services B 224), the request is used to create a new independent session (e.g. cryptographic services session 267 operating over communication dialog 227') with a cryptographic service on another alternate operating environment (e.g. operating environment theta 240) performing the same cryptographic function (e.g. cryptographic service B 243 of operating environment 240) that previously failed.

Cryptographic system 200 now will be described by way of example. A customer may want to purchase a product over the Internet (e.g. via the World Wide Web).
Accordingly, a customer may browse a retailer's web-site that house information about various products and services. In addition, the customer may purchase or place an order for a product or service on the retailer's web-site that may have an application dedicated to customer order placement and processing. This application may be considered the exemplary computing application 203 or 205 of Figure 2. As part of order processing, sensitive information may be transferred between the customer and the retailer (e.g. payment information, delivery information, confirmation numbers and the like), and may require cryptography.

The application described may reside on the retailer's computing system. Furthermore, the retailer's computer system may be capable of running a plurality of operating environments of varying platforms. Additionally, the information transferred to the retailer's application may have been locally processed for cryptography on the customer's computer, such that when the customer transfers information to the e-commerce application such information is already processed in the cryptography format. The application 203 would thus be required to process this cryptographic formatted information. As such, application 203 calls upon the cryptographic services interface 207, placing a request for cryptographic services. The cryptographic services interface 207 is initialized such that it is aware of the available cryptographic services running in the various operating environments of the retailer's computer system. In addition, the cryptographic services interface 207 facilitates the creation of cryptographic services sessions (e.g. cryptographic sessions 261 and 263 operating over communication dialogs 225 and 227, respectively) between a requesting application 203 or application protocol and available cryptographic services 223, 224, 233, and 243 found in alternate independent operating environments. The cryptographic service communicates to the cryptographic services of the alternate operating environments through communication dialogs that operate over a secure communication interface. Such communication dialogs work on accepted communication standards and protocols (e.g. TCP/IP.) In operation, the cryptographic services interface 207 receives requests form a computing application or application protocol and helps to create cryptographic services sessions between the requestor (i.e. computing application) and the available and desired cryptographic services running on the alternate operating environments. The information is processed by the cryptographic services and returned to the e-commerce application for use.

If the cryptographic services fail during processing, cryptographic services interface 207 may communicate state information, that it may have stored, about the failed cryptographic processing back to the requestor (e.g. e-commerce application.) The requestor may re-submit the request for the same cryptographic services processing to the cryptographic services interface. The cryptographic service interface may then look for an appropriate alternate cryptographic service (i.e. a cryptographic service performing the same cryptographic function that failed) running on an alternate operating environment to satisfy the re-submitted request.

Additionally, there may be another computing application 205 (e.g. a secure corporate intranet) running on the same operating environment that may require the same cryptographic services that are employed by the e-commerce computing application 203. Since the sessions are independent of each other, when the secure corporate intranet application sends a request for the same cryptographic service to the cryptographic services interface 207, the cryptographic services interface 207 creates a new and independent cryptographic services session (e.g. 265) between the secure corporate intranet computing application and the desired cryptographic service (e.g. cryptographic services B 224.) As Figures 2 and 2a illustrate, the new independent cryptographic service session (e.g. session 265) may operate over the same communication dialog (e.g. communication dialog 245) but does not interact with the existing cryptographic services session that exists between the e-commerce application and cryptographic services (e.g. session 263). Hence, the cryptographic services interface 207 may serve to multiplex sessions over the same communication dialog between requesting applications and desired cryptographic services.

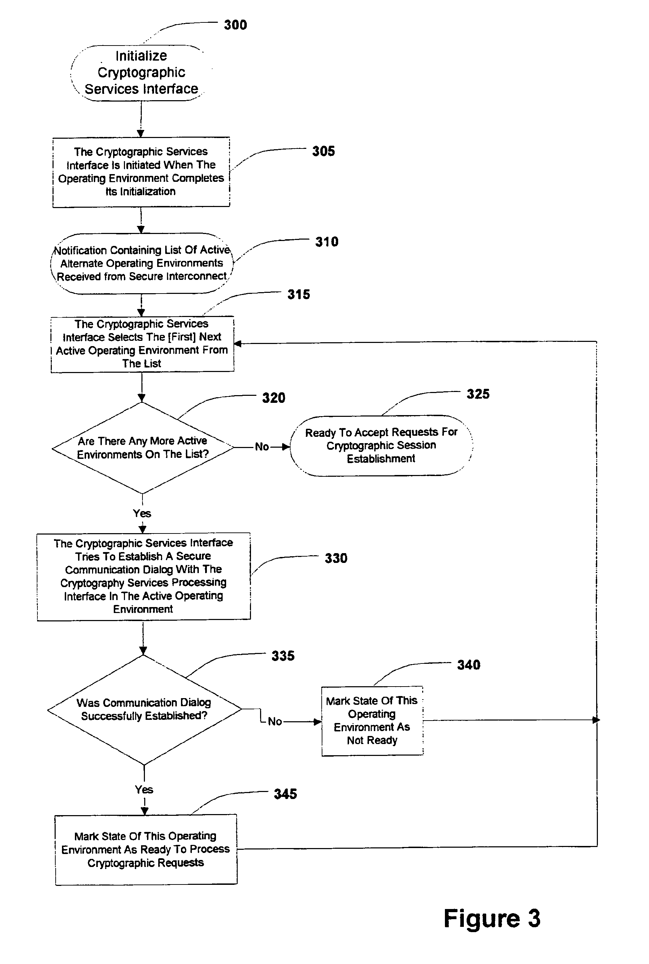

Figures 3-5 describe the processing performed by cryptographic system 200 of Figure 2. Figure 3 shows the processing performed by the cryptographic services interface 207 when initializing communication dialogs (e.g. TCP/IP protocols) between itself and alternate operating environments 220, 230, and 240. Communication dialog initialization processing starts at block 300 and proceeds to block 305 where the cryptographic services interface 207 is initialized as operating environment alpha 210 is initialized. Processing proceeds to block 310 where a list of active operating environments is received by the cryptographic services interface 207 from the secure interconnect. The cryptographic services interface 207 then selects the first (or next) active operating environment from the list at block 315. A check is then made at block 320 by the cryptographic services interface to determine if there are any more active environments on the list. If there are no more active operating environments to accept, communication dialog initialization processing ends at block 325 as the cryptographic services interface 207 is now ready to accept requests to establish cryptographic services sessions.

However, if at block 320 there are additional operating environments, the cryptographic services interface 207 proceeds to establish a secure communication dialog at block 330 with the complimentary cryptography services interface (e.g. 221, 231, or 241) in the recognized active operating environment. A check is then made by the cryptographic services interface 207 at block 335 to determine if the communication dialog was successfully established. If the communication dialog was successfully established, the operating environment with which the communication dialog was successfully established is marked by the cryptographic services interface 207 at block 345 as being ready to process cryptography requests. Processing reverts to block 315 and proceeds therefrom. In the event that the communication dialog was not successfully established with the targeted active operating environment at block 330, the operating environment is marked as being not ready by the cryptographic services interface 207 at block 340. Processing then reverts to block 315 and proceeds therefrom.

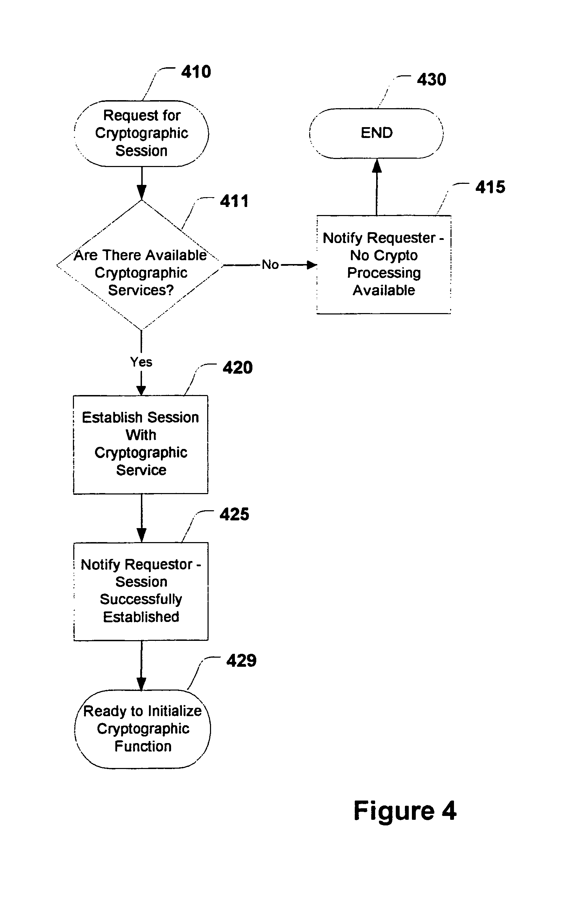

Figure 4 shows the processing performed by cryptographic system 200 when cryptographic services are requested. As described by Figure 3, operating environments 10, 220, 230, 240, cryptographic services interface 207, and cryptography processing initerfaces 221, 231, and 241 are initialized. The initialization process ensures that secure communication interface 124 is working properly and establishes basic components of communication protocols between cryptographic services interface 207 and cryptography processing interfaces 221, 231, and 241. The initialization of the cryptographic system 200 having been completed, cryptographic system 200 is now ready to provide cryptographic services.

Figure 4 shows that at block 410, a local application requests a cryptographic session to a cryptographic service. At block 411, the list of cryptographic services produced by cryptographic services interface 207 of available alternate operating environments is checked, and if the requested service is available, then a cryptographic services session is established by the cryptographic services interface 207 for the local application at block 420. The cryptographic services interface 207 subsequently notifies the requestor at block 425. The application is now ready to initialize the session for a specific cryptographic function at block 429. If at the time, in block 411, the requested cryptographic service is not available, then cryptographic services interface 207 notifies the requestor that the requested cryptographic service is not available at block 415, and processing ends at block 430.

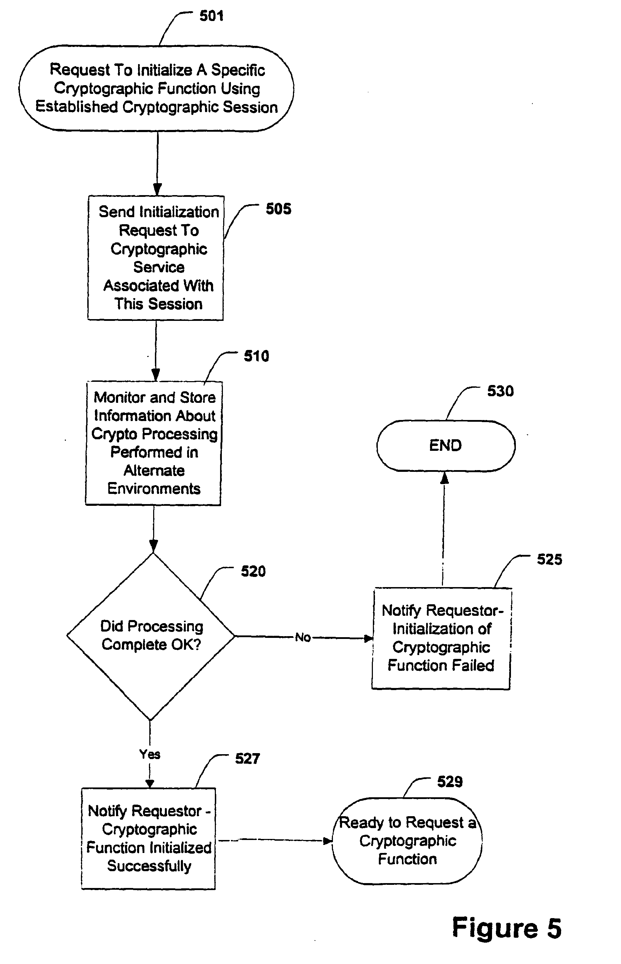

Figure 5 shows the processing that cryptographic services interface 207 performs when cryptographic services interface 207 is requested to initialize a specific cryptographic function for an established cryptographic session. The request to initialize a specific cryptographic function for a specific cryptographic service, for example, encryption, is received from the local application (i.e. 203) by cryptographic services interface 207 at block 501. The cryptographic services interface 207 sends the initialization request to the service associated with the user session at block 505. The cryptographic services interface 207 then monitors and stores information about the cryptographic processing in alternate environments at block 510. At block 520, the completion of the initialization request is made. If the processing completed successfully, then the local application (the requestor) is notified that his request completed successfully at block 527, and that further requests can be made through this session. Processing then terminates at block 529, and the application is ready to request a cryptographic function. If the processing did not complete successfully at block 520, the requestor (the local application) is notified at block 525, and processing for this request terminates at block 530. The application is ready to destroy the cryptographic session.

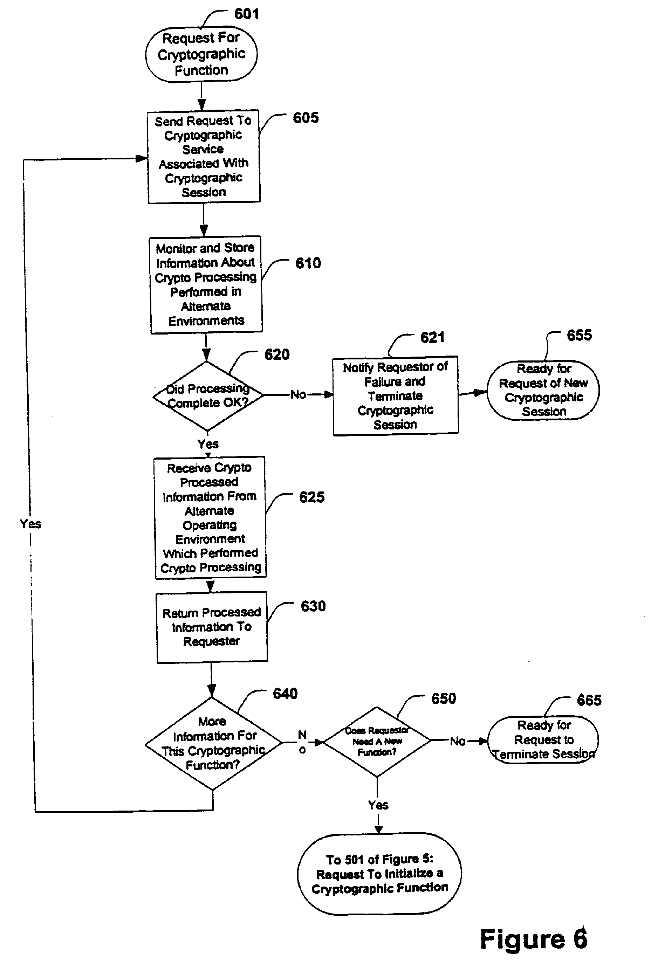

Figure 6 shows the cryptographic services interface 207 processing a user request for a cryptographic function. The request is sent to the cryptographic services interface 207 at block 601. At block 605, the cryptographic services interfaces 207 sends the request to the cryptographic services in the alternate operating environment associated with the user session. The cryptographic services interface 207 then monitors and stores information about the alternate operating environments at block 610. The cryptographic services interface 207 then checks to see if the request completed successfully at block 620. If the alternate operating environment failed, or the request was not completed successfully, the cryptographic services interface 207 notifies the requestor of the failure at block 621 and terminates the cryptographic session. At this time, the local application can request a new cryptographic session at block 655, if it so desires, and processing would then revert to block 410 of Figure 4. If the request completed successfully, the cryptographic services interface 207 receives the completed request and any residual state information from the alternate operating environment that performed the request at block 625. This information is returned to the requestor (the local application 203) at block 630. A check is then made at block 640 to determine if more information is required when performing the cryptography function. If there is more processing necessary for this cryptographic function (some cryptographic functions require more than one iteration), then processing goes back to step 605, and proceeds through until the entire function request has been satisfied. When no more processing is required, flow proceeds to step 650. If the requestor needs another cryptographic function, flow proceeds to step 501 of Figure 5. If the requestor does not need another function, then the cryptographic session terminates, and processing ends at block 665.

In sum, the present invention provides a system and process for providing redundant and resilient cryptography on a computer system. It is understood, however, that the invention is susceptible to various modifications and alternative constructions. There is no intention to limit the invention to the specific constructions described herein. On the contrary, the invention is intended to cover all modifications, alternative constructions, and equivalents falling within the scope and spirit of the invention.

For example, the present invention may be implemented in a variety of computer systems. The various techniques described herein may be implemented in hardware or software, or a combination of both. Preferably, the techniques are implemented in computer programs executing on programmable computers that each include a processor, a storage medium readable by the processor (including volatile and nonvolatile memory and/or storage elements), at least one input device, and at least one output device. Program code is applied to data entered using the input device to perform the functions described above and to generate output information. The output information is applied to one or more output devices. Each program is preferably implemented in a high level procedural or object oriented programming language to communicate with a computer system. However, the programs can be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The system may also be considered to be implemented as a computer-readable storage medium, configured with a computer program, where the storage medium so configured causes a computer to operate in a specific and predefined manner.

Although exemplary embodiments of the invention has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention as defined in the following claims.

## Claims

1. A system (200) for providing cryptographic services (223, 224, 233, 243) on a computing system (120) having a first independent operating environment (210), and a plurality of additional independent operating environments (220, 230, 240), *including at least one cryptographic service (223, 224, 233, 243) running in one of said additional independent operating environments (220, 230, 240), the cryptographic services system (200)* comprising:
a secure communications interface (124) which couples said operating environments (210, 220, 230, 240), such that said additional operating environments (220, 230, 240) may transfer to and receive electronic information from said first operating environment (210); and
a cryptographic services interface (207) residing in said first operating environment (210), said cryptographic services interface (207) determining said additional operating environments (220, 230, 240) capable of performing said cryptographic services and the functions performed by said cryptographic services (223, 224, 233, 243) wherein said cryptographic services interface (207) is electronically coupled to said additional operating environments (220, 230, 240) through said secure communications interface (124) such that said first operating environment (210) may transfer and receive cryptographic service processes requested by a computing application (203, 205) executing on said first operating environment (210).

2. The system recited in claim 1, wherein said cryptographic services interface (207) establishes and initializes communication dialogs (245, 249, 251) operating on said secure communications interface (124) to communicate information about said cryptographic services processing, said cryptographic services interface (207) monitoring said plurality of operating environments (220, 230, 240) for availability of cryptographic services, and communicating and distributing said cryptographic service process information to available cryptographic services running in at least one of said plurality of operating environments (220, 230, 240) through said secure communications interface (124), said cryptographic services receiving said cryptographic service process information, performing cryptographic processing on said information, and returning cryptographic processed information through said secure communications interface (124) to said application submitting said requests.

3. The system recited in claim 2, wherein said cryptographic services interface (207) facilitates the creation of cryptographic services sessions between said requesting computing application (203, 205) and said cryptographic services (223, 224, 233, 243) running on said alternate operating environments (220, 230, 240) that perform cryptographic functions.

4. The system recited in claim 2, wherein said communication dialogs (245, 249, 251) comprise TCP/IP protocols and standards.

5. The system recited in claim 2, wherein said available cryptographic services comprise cryptographic services that utilize and store processing state information during operation.

6. The system recited in claim 5, wherein said cryptographic services interface (207) further monitors said available cryptographic services (223, 224, 233, 243) during cryptographic service processing such that if a cryptographic service fails during cryptographic service processing of cryptographic service process information said cryptographic services interface (207) re-submits said request to an alternate available operating environments capable of performing said cryptographic services for processing said cryptographic service process information.

7. The cryptographic system (200) of claim 1, wherein said computing system (120) includes a mainframe computer (122) and a purality of computer servers (125, 126, 127), said first operating environment (210) running on the mainframe computer (122) and said plurality of additional operating environments (220, 230, 240) running on at least one of the plurality of computer servers (125, 126, 127), the cryptographic system (200) further comprising:
at least a second cryptographic services interface (221) running in at least one (220) of said additional operating environments (220, 230, 240), and coupled to the at least one cryptographic service (224), said second cryptographic services interface (221) communicating with said cryptographic services interface (207) over said secure communications interface (124) to receive and process requests for cryptographic service processes (223, 224) and to pass back processed requests to said computing application (203, 205) executing on said first operating environment (210) through said cryptographic services interface (207).

8. The cryptographic system (200) recited in claim 7, wherein said first cryptographic services interface (207) monitors and stores information about requests from the time of the initial request to when said initial request has been processed for cryptographic services and passed back to said local applications (203, 205), wherein said cryptographic services interface (207) facilitates the subsequent processing of said failed request to another operating environment (240) capable of performing said cryptographic services in the event the request is not processed or not processed correctly.

9. The cryptographic system recited in claim 7, wherein said request comprises a function call to perform cryptographic services, information, or data that requires cryptographic processing, as well as information about the requestor.

10. The cryptographic system recited in claim 7, wherein said cryptographic services (223, 224, 233, 243) comprise at least one of encryption, decryption, digital signing, verification, message digest creation, and random number generation.

11. The system recited in claim 10, wherein said first operating environment (210) is UNISYS MCP running on a CLEARPATH HMP/NX mainframe computer system, and wherein said alternate operating environment (220) is WINDOWS NT running on an Intel-based server within the CLEARPATH HMP/NX mainframe computer systeM.

12. The system recited in 11, wherein said communication between said first operating environment (210) and said second operating environments (220) is realized through the creation and initialization of secure communication dialogs operating via the Virtual Transport Layer (VTL).

13. A method for providing distributed and resilient cryptographic services (223, 224, 233, 243) on a computer system (120), comprising the steps of:
(a) creating at least one secure cryptographic services session (261) between a first operating environment (210) and a second operating environment (220), wherein said session (261) operates between a cryptographic services processing interface (207) of said first operating environment (210) and a cryptographic services processing interface (221) of said second operating system (220), and wherein said session (261) processes requests by said cryptographic services processing interface (207) for cryptographic services, said request containing data needing cryptographic services;
(b) determining available and appropriate cryptographic services (223, 224, 233 243) to perform the cryptographic service processing to satisfy said request;
(c) storing information about available cryptographic services (223); and
(d) routing said request to available cryptographic services (223) through said session (261) wherein said cryptographic services perform cryptographic functions on said request.

14. The method recited in claim 13, further comprising the steps of:
(a) monitoring processing state information about said cryptographic services (223, 224, 243) and storing and monitoring said processing state information about cryptographic services processing; and
(b) processing said monitoring information such that if the cryptographic services (223, 224, 243) fail during processing, said processing state information is passed to said cryptographic services interface (207) originating said cryptographic services request, said cryptographic services interface (207) re-submitting said request to create a new and independent cryptographic services session between said cryptographic services interface (207) and the available appropriate cryptographic services (223) using said processing state information.

15. The method recited in claim 13, wherein said request is offered by a computing application running on one of a plurality of operating environments (210, 220, 230, 240) cooperating with other computer systems through various communication interfaces, including the Internet.

## Patentansprüche

1. Ein System (200) zur Bereitstellung kryptographischer Dienste (223, 224, 233, 243) in einer Datenverarbeitungsanlage (120), die eine erste unabhängige arbeitende Umgebung (210) und eine Vielzahl von zusätzlichen unabhängigen arbeitenden Umgebungen (220, 230, 240) hat, einschließlich mindestens eines kryptographischen Dienstes (223, 224, 233, 243), der in einer der zusätzlichen unabhängigen arbeitenden Umgebungen (220, 230, 240) ausgeführt wird, wobei das kryptographische Dienstsystem (200) Folgendes umfasst:
eine sichere Kommunikationsschnittstelle (124), welche die arbeitenden Umgebungen (210, 220, 230, 240) verbindet, so dass die zusätzlichen arbeitenden Umgebungen (220, 230, 240) an die erste arbeitende Umgebung (210) senden und elektronische Informationen von ihr empfangen können, und
eine kryptographische Dienstschnittstelle (207), die sich in der ersten arbeitenden Umgebung (210) befindet, wobei die kryptographische Dienstschnittstelle (207) die zusätzlichen arbeitenden Umgebungen (220, 230, 240), die in der Lage sind, die kryptographischen Dienste durchzuführen, bestimmt und die Funktionen bestimmt, die von den kryptographischen Diensten (223, 224, 233, 243) ausgeführt werden, wobei die kryptographische Dienstschnittstelle (207) mit den zusätzlichen arbeitenden Umgebungen (220, 230, 240) durch die sichere Kommunikationsschnittstelle (124) elektronisch gekoppelt ist, so dass die erste arbeitende Umgebung (210) kryptographische Dienstprozesse senden und empfangen kann, die von einer Rechneranwendung (203, 205) angefordert werden, welche in der ersten arbeitenden Umgebung (210) ausgeführt wird.

2. Das System des Anspruchs 1, wobei die kryptographische Dienstschnittstelle (207) Kommunikationsdialoge (245, 249, 251) erstellt und initialisiert, welche auf der sicheren Kommunikationsschnittstelle (124) ausgeführt werden, um Informationen über die kryptographische Dienstverarbeitung zu kommunizieren, wobei die kryptographische Dienstschnittstelle (207) die Vielzahl von arbeitenden Umgebungen (220, 230, 240) auf die Verfügbarkeit kryptographischer Dienste hin überwacht und die kryptographischen Dienstprozess-Informationen über die sichere Kommunikationsschnittstelle (124) an verfügbare kryptographische Dienste kommuniziert und verteilt, die in mindestens einer der Vielzahl von arbeitenden Umgebungen (220, 230, 240) ausgeführt werden, wobei die kryptographischen Dienste die kryptographischen Dienstprozess-Informationen empfangen, kryptographische Verarbeitung der Informationen durchführen und kryptographische verarbeitete Informationen über die sichere Kommunikationsschnittstelle (124) an die Anwendung zurückliefern, welche die Anfragen sendet.

3. Das System des Anspruchs 2, wobei die kryptographische Dienstschnittstelle (207) die Erzeugung kryptographischer Dienstsitzungen zwischen der anfordernden Computeranwendung (203, 205) und den kryptographischen Diensten (223, 224, 233, 243) erleichtert, welche in den zusätzlichen arbeitenden Umgebungen (220, 230, 240) ausgeführt werden, die kryptographische Funktionen ausführen.

4. Das System gemäß Anspruch 2, wobei die Kommunikationsdialoge (245, 249, 251) TCP/IP-Protokolle und Standards umfassen.

5. Das System gemäß Anspruch 2, wobei die verfügbaren kryptographischen Dienste kryptographische Dienste umfassen, die während des Betriebs Verarbeitungszustands-Informationen nutzen und speichern.

6. Das System gemäß Anspruch 5, wobei die kryptographische Dienstschnittstelle (207) weiter die verfügbaren kryptographischen Dienste (223, 224, 233, 243) während kryptographischer Dienstverarbeitung überwacht, so dass, wenn ein kryptographischer Dienst während kryptographischer Dienstverarbeitung kryptographischer Dienstprozess-Informationen ausfällt, die kryptographische Dienstschnittstelle (207) die Anfrage neu an eine alternative verfügbare arbeitende Umgebung sendet, die in der Lage ist, die kryptographischen Dienste zur Verarbeitung der kryptographischen Dienstprozess-Informationen durchzuführen.

7. Das kryptographisches System (200) gemäß Anspruch 1, wobei das Rechnersystem (120) einen Großrechner (122) und eine Vielzahl von Computerservern (125, 126, 127) einschließt, wobei die erste arbeitende Umgebung (210) auf dem Großrechner (122) ausgeführt wird und die Vielzahl von zusätzlichen arbeitenden Umgebungen (220, 230, 240) auf mindestens einem der Vielzahl von Computerservern (125, 126, 127) ausgeführt wird, wobei das kryptographische System (200) weiter Folgendes umfasst:
mindestens eine zweite kryptographische Dienstschnittstelle (221), die in mindestens einer (220) der zusätzlichen arbeitenden Umgebungen (220, 230, 240) läuft und mit dem mindestens einen kryptographischen Dienst (224) gekoppelt ist, wobei die zweite kryptographische Dienstschnittstelle (221) mit der kryptographischen Dienstschnittstelle (207) über die sichere Kommunikationsschnittstelle (124) kommuniziert, um Anfragen nach kryptographischen Dienstprozessen (223, 224) entgegenzunehmen und zu verarbeiten und um verarbeitete Anfragen über die kryptographische Dienstschnittstelle (207) an die Rechneranwendung (203, 205) zurückzuliefern, die in der ersten arbeitenden Umgebung (210) ausgeführt wird.

8. Das kryptographische System (200) gemäß Anspruch 7, wobei die erste kryptographische Dienstschnittstelle (207) Informationen über Anfragen vom Zeitpunkt der ersten Anfrage bis dann, wenn die erste Anfrage zum Zwecke kryptographischer Dienste verarbeitet und an die lokalen Anwendungen (203, 205) zurückgesendet wurde, überwacht und speichert, wobei die kryptographische Dienstschnittstelle (207) die anschließende Verarbeitung der gescheiterten Anfrage an eine andere arbeitende Umgebung (240) erleichtert, die in der Lage ist, die kryptographischen Dienste durchzuführen, falls die Anfrage nicht oder nicht korrekt verarbeitet wunde.

9. Das kryptographische System gemäß Anspruch 7, wobei die Anfrage einen Funktionsprozeduraufruf zur Durchführung kryptographischer Dienste, Informationen oder Daten umfasst, die kryptographisch verarbeitet werden müssen, sowie Informationen über den Anfordernden.

10. Das kryptographische System gemäß Anspruch 7, wobei die kryptographischen Dienste (223, 224, 233, 243) mindestens eines von Verschlüsselung, Entschlüsselung, digitaler Signatur, Überprüfung, Erstellung von Nachrichtensammlungen und Erstellung von Zufallszahlen umfassen.

11. Das System gemäß Anspruch 10, wobei die erste arbeitenden Umgebung (210) UNISYS MCP ist, ausgeführt auf einem CLEARPATH HMP/NX-Großrechner-Computersystem, und wobei die alternative arbeitende Umgebung (220) WINDOWS NT ist, ausgeführt auf einem Server auf Intel-Basis innerhalb des CLEARPATH HMP/NX-Großrechner-Computersystems.

12. Das System gemäß Anspruch 11, wobei die Kommunkation zwischen der ersten arbeitenden Umgebung (210) und den zweiten arbeitenden Umgebungen (220) durch die Erstellung und Initialisierung sicherer Kommunikationsdialoge durchgeführt wird, die über die Virtual Transport Layer (VTL) stattfinden.

13. Ein Verfahren zur Bereitstellung verteilter und belastbarer kryptographischer Dienste (223, 224, 233, 243) in einem Computersystem (120), folgende Schritte umfassend:
(a) Erstellung mindestens einer sicheren kryptographischen Dienstsitzung (261) zwischen einer ersten arbeitenden Umgebung (210) und einer zweiten arbeitenden Umgebung (220), wobei die Sitzung (261) zwischen einer kryptographischen Dienstverarbeitungs-Schnittstelle (207) der ersten arbeitenden Umgebung (210) und einer kryptographischen Dienstverarbeitungs-Schnittstelle (221) der zweiten arbeitenden Umgebung (220) arbeitet und wobei die Sitzung (261) Anfragen der kryptographischen Dienstverarbeitungs-Schnittstelle (207) nach kryptographischen Diensten verarbeitet, wobei die Anfrage Daten enthält, die kryptographische Dienste benötigen,
(b) Bestimmung verfügbarer und passender kryptographischer Dienste (223, 224, 233, 243) zur Durchführung der kryptographischen Dienstverarbeitung, um die Anfrage zu bedienen,
(c) Speicherung von Informationen über verfügbare kryptographische Dienste (223), und
(d) Routen der Anfrage an verfügbare kryptographische Dienste (223) durch die Sitzung (261), wobei die kryptographischen Dienste kryptographische Funktionen zu der Anfrage ausführen.

14. Das Verfahren gemäß Anspruch 13, das weiter folgende Schritte umfasst:
(a) Überwachung von Verarbeitungszustands-Informationen über die kryptographischen Dienste (223, 224, 243) und Speicherung und Überwachung der Verarbeitungszustands-Informationen über kryptographische Dienstverarbeitung, und
(b) Verarbeitung der Überwachungsinformationen, so dass, wenn die kryptographischen Dienste (223, 224, 243) während der Verarbeitung ausfallen, die Verarbeitungszustands-Informationen an die kryptographische Dienstschnittstelle (207) geleitet werden, von der die kryptographische Dienstanforderung ausgeht, wobei die kryptographische Dienstschnittstelle (207) die Anforderung erneut sendet, um mit Hilfe der Verarbeitungszustands-Informationen eine neue und unabhängige kryptographische Dienstsitzung zwischen der kryptographischen Dienstschnittstelle (207) und den verfügbaren passenden kryptographischen Diensten (223) zu erzeugen.

15. Das Verfahren gemäß Anspruch 13, wobei die Anforderung von einer Rechneranwendung gestellt wird, die in einem aus einer Vielzahl von arbeitenden Umgebungen (210, 220, 230, 240) ausgeführt wird, welche mit anderen Computersystemen über verschiedene Kommunikationsschnittstellen, einschließlich des Internet, zusammenarbeiten.

## Revendications

1. Un système (200) pour fournir des services cryptographiques (223, 224, 233, 243) sur un système informatique (120), comprenant un premier environnement d'exploitation (210) indépendant, et une pluralité d'environnements d'exploitation (220, 230, 240) indépendants additionnels, comprenant au moins un service cryptographique (223, 224, 233, 243), fonctionnant dans un desdits environnements d'exploitation (220, 230, 240) indépendants additionnels, le système de service cryptographique (200) comprenant :
une interface de communication sécurisée (124), couplant lesdits environnements d'exploitation (220, 230, 240), de manière que lesdits environnements d'exploitation (220, 230, 240) additionnels puissent transférer de l'information vers ledit premier environnement d'exploitation (210) et recevoir de l'information de celui-ci ; et
une interface de service cryptographique (207), résidant dans ledit premier environnement d'exploitation (210), ladite interface de service cryptographique (207) déterminant lesdits environnements d'exploitation (220, 230, 240) additionnels capables d'effectuer lesdits services cryptographiques et les fonctions accomplies par lesdits services cryptographiques (223, 224, 233, 243), dans lequel ladite interface de service cryptographique (207) est couplée électroniquement auxdits environnements d'exploitation (220, 230, 240) additionnels, par l'intermédiaire de ladite interface de communication sécurisée (124), de manière que ledit premier environnement d'exploitation (210) puisse transférer et recevoir des processus de services cryptographiques, requis par une application informatique (203, 205) s'exécutant sur ledit premier environnement d'exploitation (210).

2. Le système selon la revendication 1, dans lequel ladite interface de service cryptographique (207) établit et initialise des dialogues de communication (245, 249, 251) fonctionnant sur ladite interface de communication sécurisée (124), afin de communiquer de l'information concernant ledit traitement de services cryptographiques, ladite interface de service cryptographique (207) surveillant ladite pluralité d'environnements d'exploitation (220, 230, 240) au sujet de la disponibilité des services cryptographiques, et communiquant et distribuant ladite information de traitement de services cryptographiques à des services cryptographiques disponibles, fonctionnant dans au moins l'un de ladite pluralité d'environnements d'exploitation (220, 230, 240), par ladite interface de communication sécurisée (124), lesdits services cryptographiques recevant ladite information de traitement de services cryptographiques, exécutant un traitement cryptographique sur ladite information, et retournant l'information cryptographique traitée, par ladite interface de communication sécurisée (124), à ladite application soumettant lesdites requêtes.

3. Le système selon la revendication 2, dans lequel ladite interface de service cryptographique (207) facilite la création de sessions de services cryptographiques, entre ladite application informatique (203, 205) demandeuse et lesdits services cryptographiques (223, 224, 233, 243) fonctionnant sur lesdits environnements d'exploitation (220, 230, 240) alternatifs, exécutant des fonctions cryptographiques.

4. Le système selon la revendication 2, dans lequel lesdits dialogues de communication (245, 249, 251) comprennent des protocoles et des standards TCP/IP.

5. Le système selon la revendication 2, dans lequel lesdits services cryptographiques disponibles comprennent des services cryptographiques utilisant et stockant une information d'état de traitement durant le fonctionnement.

6. Le système selon la revendication 5, dans lequel ladite interface de service cryptographique (207), en outre, surveille lesdits services cryptographiques (223, 224, 233, 243) disponibles, durant le traitement de service cryptographique, de manière que, si un service cryptographique devient défaillant durant le traitement de service cryptographique de l'information de traitement de services cryptographiques, ladite interface de service cryptographique (207) soumet de nouveau ladite requête à des environnements d'exploitation disponibles alternatifs, capables d'exécuter lesdits services cryptographiques, pour traiter ladite information de traitement de services cryptographiques.

7. Le système cryptographique (200) selon la revendication 1, dans lequel ledit système informatique (120) comprend une unité centrale de traitement (122) et une pluralité de serveurs informatiques (125, 126, 127), ledit premier environnement d'exploitation (210) fonctionnant sur l'unité centrale de traitement (122) et ladite pluralité d'environnements d'exploitation (220, 230, 240) fonctionnant sur au moins l'un de la pluralité de serveurs informatiques (125, 126, 127), le système cryptographique (200) comprenant en outre :
au moins une deuxième interface de service cryptographique (221), fonctionnant dans au moins l'un (220) desdits environnements d'exploitation (220, 230, 240) additionnels, et couplé au au moins un service cryptographique (224), ladite deuxième interface de service cryptographique (221) communiquant avec ladite interface de service cryptographique (207), sur ladite interface de communication sécurisée (124), pour recevoir et traiter des requêtes pour des processus de service cryptographique (223, 224), et pour retourner des requêtes traitées à ladite application informatique (203, 205) s'exécutant sur ledit premier environnement d'exploitation (210), par ladite interface de service cryptographique (207).

8. Le système cryptographique (200) selon la revendication 7, dans lequel ladite première interface de service cryptographique (207) surveille et stocke de l'information concernant des requêtes, à partir du moment de la requête initiale, au moment auquel ladite requête initiale a été traitée pour des services cryptographiques et retournée auxdites applications (203, 205) locales, dans lequel ladite interface de service cryptographique (207) facilite le traitement subséquent de ladite requête ayant échoué à un autre environnement d'exploitation (240), capable d'exécuter lesdits services cryptographiques, dans l'éventualité où la requête n'est pas traitée, ou pas traitée correctement.

9. Le système cryptographique selon la revendication 7, dans lequel ladite requête comprend un appel de fonction pour accomplir des services cryptographiques, de l'information, ou des données qui demandent un traitement cryptographique, ainsi que de l'information au sujet de l'émetteur de la requête.

10. Le système cryptographique selon la revendication 7, dans lequel lesdits services cryptographiques (223, 224, 233, 243) comprennent au moins l'un, d'un chiffrement, d'un déchiffrement, d'une signature numérique, d'une vérification, d'une création d'un résumé de message, et une génération de nombres aléatoires.

11. Le système selon la revendication 10, dans lequel ledit premier environnement d'exploitation (210) est UNISYS MCP, fonctionnant sur un système d'unité centrale de traitement CLEARPATH HMP/NX, et dans lequel ledit environnement d'exploitation (220) alternatif est WINDOWS NT, fonctionnant sur un serveur à base Intel, dans le système d'unité centrale de traitement CLEARPATH HMP/NX.

12. Le système selon la revendication 11, dans lequel ladite communication, entre ledit premier environnement d'exploitation (210) et ledit deuxième environnement d'exploitation (220) est réalisé par la création et l'initialisation de dialogues de communication sécurisés, fonctionnant via la couche virtuelle de transport (VTL, Virtual Transport Layer).

13. Un procédé, pour fournir des services cryptographiques (223, 224, 233, 243), distribués et flexibles, sur un système informatique (120), comprenant les étapes ci-après :
(a) création d'au moins une session de services cryptographiques (261) sécurisée, entre un premier environnement d'exploitation (210) et un deuxième environnement d'exploitation (220), dans lequel ladite session (261) fonctionne entre une interface de service cryptographique (207), dudit premier environnement d'exploitation (210), et une interface de traitement service cryptographique (221) dudit deuxième environnement d'exploitation (220), et dans lequel ladite session (261) traite des requêtes de service cryptographique, passées par ladite interface de service cryptographique (207), ladite requête contenant des données nécessitant des services cryptographiques ;
(b) détermination des services cryptographiques (223, 224, 233, 243) disponibles et appropriés, pour exécuter le traitement de service cryptographique, afin de satisfaire ladite requête ;
(c) stockage de l'information concernant des services cryptographiques (223) disponibles ; et
(d) acheminement de ladite requête aux services cryptographiques (223) disponibles, par ladite session (261), dans lequel lesdits services cryptographiques accomplissent des fonctions cryptographiques sur ladite requête.

14. Le procédé selon la revendication 13, comprenant en outre les étapes ci-après :
(a) surveillance de l'information d'état de traitement, au sujet desdits services cryptographiques (223, 224, 243), et stockage et surveillance de ladite information d'état de traitement, au sujet du traitement desdits services cryptographiques ; et
(b) traitement de ladite information de surveillance, se manière que, si les services cryptographiques (223, 224, 243) deviennent défaillant durant le traitement, ladite information d'état de traitement soit passée à ladite interface de service cryptographique (207) qui est l'origine de ladite requête de services cryptographiques, ladite interface de service cryptographique (207) soumettant de nouveau ladite requête, pour créer une session de services cryptographiques nouvelle et indépendante, entre ladite interface de service cryptographique (207) et les services cryptographiques (223) appropriés disponibles, en utilisant ladite information d'état de traitement.

15. Le procédé selon la revendication 13, dans lequel ladite requête est offerte par une application informatique fonctionnant sur l'un d'une pluralité d'environnements d'exploitation (210, 220, 230, 240), coopérant avec d'autres systèmes informatiques, par l'intermédiaire de diverses interfaces de communication, y compris l'Internet.
